**Europäisches Patentamt**

**European Patent Office**

**Office européen des brevets**

(19)

(11) Veröffentlichungsnummer: **0 366 771 B1**

(12) ## EUROPÄISCHE PATENTSCHRIFT

(45) Veröffentlichungstag der Patentschrift:
14.08.91 Patentblatt 91/33

(51) Int. Cl.⁵: **F16L 23/00**

(21) Anmeldenummer: 89905682.4

(22) Anmeldetag: 28.04.89

(86) Internationale Anmeldenummer:
PCT/EP89/00475

(87) Internationale Veröffentlichungsnummer:
WO 89/11615 30.11.89 Gazette 89/28

(54) **FLANSCHVERBINDUNG.**

(30) Priorität: 18.05.88 AT 1292/88

(43) Veröffentlichungstag der Anmeldung:
09.05.90 Patentblatt 90/19

(45) Bekanntmachung des Hinweises auf die
Patenterteilung:
14.08.91 Patentblatt 91/33

(84) Benannte Vertragsstaaten:
AT BE CH DE FR GB IT LI LU NL SE

(56) Entgegenhaltungen:
EP-A- 0 078 946
EP-A- 0 148 286
DE-A- 2 553 720
DE-A- 3 710 665

(73) Patentinhaber: SPIRO-MASCHINEN AG
Industriestrasse
CH-3178 Boesingen (CH)

(72) Erfinder: SCHWARZ, Walter
Lindenbühelweg 12
A-6020 Innsbruck (AT)
Erfinder: JENSEN, Tor, Anders
Impasse du Tronchet 7
CH-1740 Neyruz (CH)

(74) Vertreter: Torggler, Paul, Dr. et al
Wilhelm-Greil-Strasse 16
A-6020 Innsbruck (AT)

## Beschreibung

Die Erfindung betrifft eine Flanschverbindung für dünnwandige, insbesondere gewickelte Rohre, mit einem Flanschprofil, das einen in das Ende des Rohres einsetzbaren, ersten Steg, der sich parallel zur Rohrwandung erstreckt, und einen davon senkrecht hochstehenden, zweiten Steg aufweist, und mit mehreren am zweiten Steg anzuordnenden Spannelementen, die das Rohr mit dem Flanschprofil verbinden.

Die Verbindung von dünnwandigen Rohren, die vor allem zur Herstellung von Lüftungskanälen oder dergleichen eingesetzt werden, stellt trotz einer Vielzahl von verschiedenen Vorschlägen ein bisher nicht befriedigend gelöstes Problem dar, da sie die möglichst einfache Anbringung von Verbindungsflanschen an den glatten Rohrenden erfordert.

So zeigt beispielsweise die EP-A-148286 eine Flanschverbindung der eingangs genannten Art, die rechteckige Rohre verbindet. Sie besteht aus einem annähernd L-förmigen Profil pro Rechteckseite, das in das Rohr eingesetzt wird, in dessen Kantenbereich eine zur Rohrwand hin ausgeformte Sicke und an dessen freien Rändern je eine in der Dimensionierung der Sicke entsprechende Bördelung vorgesehen wird. Mittels einer elastischen Klemmleiste bzw. mehreren Abschnitten der Klemmleiste wird das Profil in einem Blechrohr zwischen der Sicke und der Randbördelung des hochstehenden Steges, und in einem aus elastischem Material bestehenden Rohr zwischen der Sicke und der Randbördelung des in das Rohr eingreifenden Steges verspannt. Die Verbindung der Flanschprofile untereinander erfolgt durch Verklammerung oder Verschraubung der hochstehenden Stege.

Für runde Blechrohre beschreibt die EP-A-78946 einen aus Blech, insbesondere Federstahlblech gekanteten Flanschring, der ebenfalls etwa L-förmig geformt ist. Der ins Rohr einzusetzende Steg ist endseitig nach außen schräg zurückgebogen, sodaß sich beim Einschlagen des Ringes in das Rohr der zurückgebogene Teil an die Rohrwandung anpreßt, wobei eine zusätzliche Sicherung noch dadurch erreicht, daß der Ring hinter nach innen gerichteten Vorsprüngen oder Ausbiegungen des Rohres verrastet. Die Verbindung zweier Flanschringe erfolgt ebenfalls durch Verschrauben oder Verklammern.

Beiden bekannten Ausführungen haftet der Nachteil an, daß die Flanschprofile nur durch Reibung bzw. Klemmung mit den Rohrenden verbunden sind, sofern nicht eine zusätzliche Bearbeitung des Rohres gemäß der EP-A-78946, also das Ausbilden von Vorsprüngen bzw. Stanzen von Ausbiegungen, usw. erfolgt.

Die Erfindung hat es sich zur Aufgabe gestellt, eine Flanschverbindung zu schaffen, die ohne zusätzliche Bearbeitung des Rohrendes zu einem Formschluß in Längsrichtung führt.

Erfindungsgemäß wird diese Aufgabe dadurch gelöst, daß der in das Rohrende einsetzbare erste Steg des Flanschprofils in der dem zweiten Steg zugewandten Seite eine Sicke aufweist, und daß jedes Spannelement am zweiten Steg um eine zur Stegebene senkrechte Achse drehbar gelagert ist, und einen Kopfteil aufweist, der eine in die Sicke einschwenkbare Verriegelungsnocke aufweist.

Auf diese Weise wird eine rasche, einfache und billige Flanschverbindung erzielt, da das Flanschprofil aus gewöhnlichem Blech ohne besondere Elastizität geformt wird, in das Rohr lose eingesetzt wird, wobei gegebenenfalls eine Dichtung zwischengelegt werden kann, und dann durch Verdrehen der in Abständen drehbar angeordneten Spannelemente mit dem Rohr formschlüssig verbunden wird. Jede in die Sicke einschwenkbare Nocke drückt den Rand des Rohres zwangsläufig in die sicke, sodaß der Formschluß in Längsrichtung des Rohres erzielt wird. Da das Eindrücken des Randes jeweils auf einen sehr kleinen Bereich beschränkt ist, kann das Verdrehen des Spannelementes mit geringem Kraftaufwand, je nach Ausbildung ohne weiteres auch von Hand erfolgen. Die durch den erfindungsgemäßen Vorschlag gegebene drehbare Anordnung des Spannelementes ist bevorzugt durch eine Lagerung in einer Durchbrechung des zweiten Steges gegeben, woraus sich eine bevorzugte Ausführung ergibt, in der das Spannelement die zweiten Stege zweier aneinanderliegender Flanschprofile miteinander verbindet.

Die oben ausgeführten Vorteile der leicht und rasch herzustellenden Flanschverbindungen werden damit noch offensichtlicher, da durch Einsetzen und Verdrehen der Spannelemente sowohl die Verbindung des Flanschprofiles mit dem Rohr als auch mit dem zweiten Flanschprofil erfolgt. Mit wenigen, wechselweise eingeführten Spannelementen kann damit die Rohrverbindung ebenfalls erzielt werden. Hiezu sieht eine weitere bevorzugte Ausführung Ausführung vor, daß das Spannelement an beiden Seiten eines die beiden zweiten Stege der beiden Flanschprofile durchsetzenden Mittelstückes je einen Kopfteil mit einer Verriegelungsnocke aufweist, sodaß jedes Spannelement beide Rohre mit den Flanschprofilen und beide Flanschprofile gleichzeitig verbindet. Das Mittelstück des Spannelementes kann beispielsweise durch eine übliche Schraude mit Mutter gebildet sein, denen nach Art von Beilagsscheiben zwei annähernd rechteckige Flachstücke mit exzentrischer Bohrung zugeordnet werden, wobei die freien Enden der Flachstücke die in die Sicken einschwenkenden Verriegelungsnocken bilden. Die Verriegelungsnocke besitzt vorzugsweise eine bis zur Hälfte abgerundete Stirnseite, um das Einschwenken zu erleichtern, wobei die zweite Hälfte der Stirnseite als Anschlag gegen Durchdrehen wirkt. Somit verschwenkt beim Anziehen der Mutter das mutterseitige Flachstück und beim Ver-

2

drehen des Schraubenkopfes um etwa 60°-90° auch das kopfseitige Flachstück auf Grund der Reibung selbständig bis zum Anschlag in die Sicke, wobei der Rohrrand nur an dieser Stelle eingedrückt wird.

Eine besonders einfache handzuhabende Ausführung ergibt sich dabei dann, wenn an den zweiten Stegen untereinander fluchtende Längsschlitze vorgesehen sind, und das Spannelement als einstückiger Flachriegel ausgebildet ist, der aus einer zu den ersten Stegen parallelen Einsetzposition in eine dazu senkrechte Spannposition verdrehbar ist. In diesem Fall erweist es sich als günstig, wenn die beiden Kopfteile des Flanschriegels durch das Mittelstück voneinander um die doppelte Dicke eines zweiten Steges distanziert sind, und jeder zweite Steg eine zum jeweils anliegenden Kopfteil hin ausgeformte Sicke zwischen dem Längsschlitz und dem ersten Steg aufweist. Durch die Sicke in den hochstehenden zweiten Stegen wird durch Reibung zwischen der Sicke und dem Flachriegel dessen Spannposition gegen unbeabsichtigtes Lösen gesichert. Die Sicke kann dabei auch an tiefstmöglicher Stelle, also noch im Kantenbereich innerhalb der Sicke im ersten Steg vorgesehen sein. Zum leichteren Einführen und Verdrehen des Flachriegels ist bevorzugt weiters vorgesehen, daß die das Flanschprofil berührenden Kanten des Kopfteiles abgeschrägt oder gerundet sind.

Eine vereinfachte Ausführung der Flanschverbindung, insbesondere für kürzere Rohrstücke geringeren Querschnittes weist ein einziges Flanschprofil auf, das dann annähernd T-förmig ausgebildet ist, sodaß es zuerst in das Ende des einen Rohres eingeschoben wird, und anschließend das andere Rohr auf den freien Steg des Flanschprofiles aufgeschoben wird. Nach dem Verdrehen der Spannelemente ist der Formschluß in Längsrichtung ebenfalls gegeben.

Nachstehend wird nun die Erfindung an Hand der Figuren der beiliegenden Zeichnungen näher beschrieben, ohne darauf beschränkt zu sein.

Es zeigen :

| Fig. 1 | in Schrägansicht ein mit einem Flanschprofil bestücktes Rohrende, |
| Fig. 2 | einen Ausschnitt aus einer bevorzugten Ausführung einer Flanschverbindung, |
| Fig. 3 | einen Flachriegel in Seitenansicht, |
| Fig. 4 | einen Flachriegel in einer Ansicht von unten, |
| Fig. 5 | einen Schnitt nach der Linie V-V in Fig. 3, |
| Fig. 6 | einen Vertikalschnitt durch ein ins Rohrende eingesetztes Flanschprofil, |
| Fig. 7 | einen Vertikalschnitt nach Fig. 6 nach dem Verdrehen eines nicht gezeichneten Spannelementes, |
| Fig. 8 | einen Schnitt gemäß Fig. 7 mit eingesetztem Spannelement, |
| Fig. 9 und 10 | Rohrendeansichten bei anderen Querschnittsformen des Rohres, |
| Fig. 11 | einen Ausschnitt aus einer zweiten Ausführung einer Flanschverbindung, |
| Fig. 12 | einen Schnitt nach der Linie XII-XII in Fig. 11, |
| Fig. 13 | einen Ausschnitt ähnlich Fig. 11 durch eine dritte Ausführung, und |
| Fig. 14 | eine Schrägansicht ähnlich Fig. 2 einer weiteren Ausführung. |

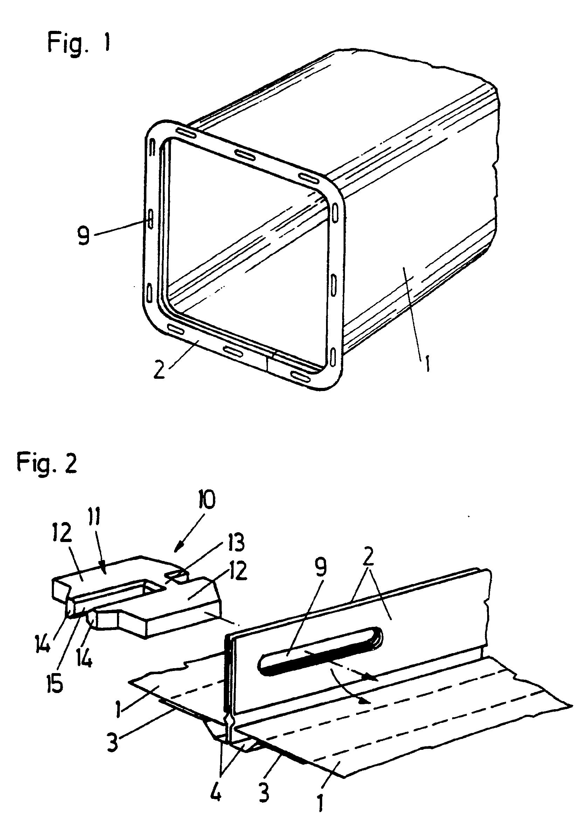

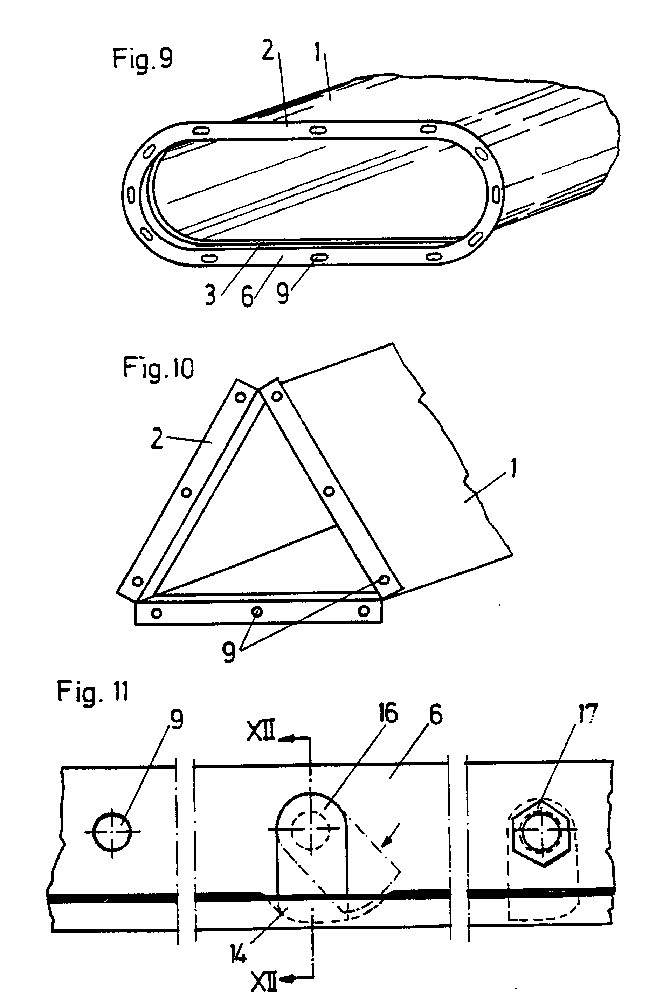

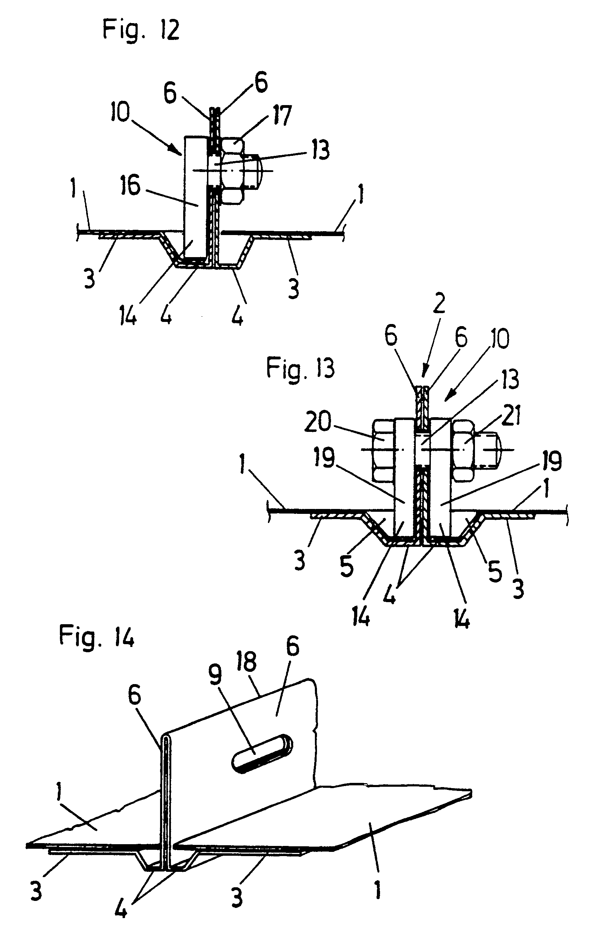

Das Ende eines Rohres 1 beliebiger Querschnittsform (Fig. 1, 9, 10) wird mit einem Flanschprofil 2 versehen, das in den Darstellungen der Fig. 1 bis 12 etwa L-förmig, und in der Darstellung nach Fig. 14 etwa T-förmig aus einem flachen Blechband geformt ist. Das Flanschprofil 2 erstreckt sich bevorzugt einstückig über den Umfang des Rohres 1, es könnte aber ebenso aus mehreren Abschnitten bzw. mehreren aneinandergereihten Prifilen zusammengesetzt sein. Wie vor allem aus den Fig. 2 und 6 bis 8 ersichtlich, besteht das aus einem flachen Blechband gefertigte L-förmige Flanschprofil 2 aus einem ersten Steg 3, der parallel zur Rohrwand verläuft und innenseitig an die Rohrwand angelegt wird. Der Steg 3 wird unmittelbar neben der Kante mit dem zweiten hochstehenden Steg 6 mit einer Sicke 4 versehen, die ins Rohrinnere hin ausgeformt ist, sodaß außenseitig eine Vertiefung ausgebildet ist. Der hochstehende zweite Steg 6 ist gemäß der Ausführung nach den Fig. 1 bis 8 im oberen Teil mit einem Versteigungssteg 7 versehen, und unterhalb des Versteifungssteges 7 ist eine weitere Sicke 8 angeordnet, die in Richtung des ersten Steges 3 ausgebogen ist, und den Versteifungssteg 7 geringfügig überragt. Der hochstehende Steg 6 und der Versteifungssteg 7 sind mit Durchbrechungen 9 versehen, die, wie aus Fig. 10 ersichtlich, kreisrunde Löcher oder gemäß Fig. 1 und 2 Längsschlitze parallel zum ersten Steg 3 darstellen.

Ein T-förmiges Flanschprofil gemäß Fig. 14 ist ebenfalls aus einem flachen Blechband gefaltet und weist zu beiden Seiten der über die abgebogene Oberkante 18 verbundenen hochstehenden stege 6 je einen ersten Steg 3 parallel zur Rohrwand auf, von denen jeder wiederum mit einer kantennahen Sicke 4 in der beschriebenen Weise versehen ist. Während ein L-förmiges Flanschprofil an jedem Rohrende vorgesehen wird, und dann aneinanderliegende Flanschprofile in der noch zu erläuternden Weise verbunden werden, wird eine Rohrverbindung über ein T-förmiges Flanschprofil so hergestellt, daß dieses zuerst in ein Rohrende eingesteckt und anschließend das zweite Rohr aufgesteckt wird. Dieses Flanschprofil ist somit eher für kürzere, leicht manipulierbare Rohre geeignet.

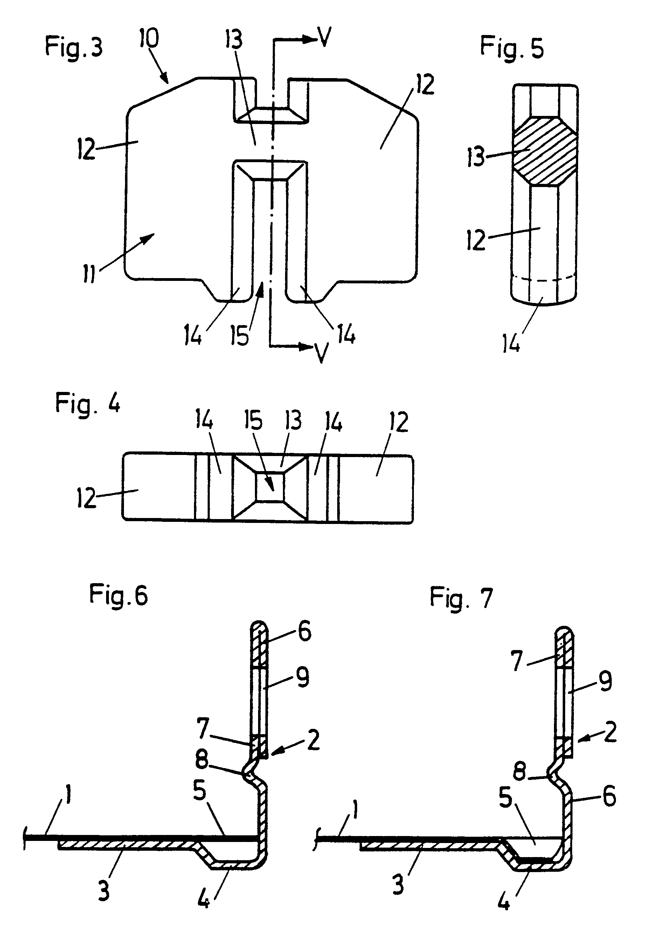

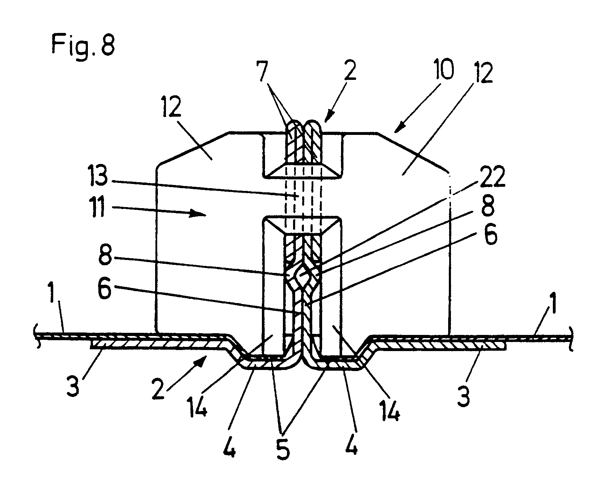

Für die erwähnte Verbindung zwischen dem Flanschprofil 2 und dem Rohr 1 werden Spannelemente 10 verwendet. Jedes Spannelement 10 weist ein eine Drehachse definierendes Mittelstück 13 auf, das in einer Durchbrechung 9 drehbar gelagert ist. Dem Mittelstück 13 ist ein Kopfteil 12 zugeordnet, das eine Verriegelungsnocke 14 aufweist. Durch Verdrehen des Spannelementes 10 schwenkt die Verriegelungsnocke 14 in die durch die Sicke 4 gebildete Vertiefung ein. Der die Sicke 4 überdeckende Rand 5 des Rohres 1, in das das Flanschprofil 2 eingesetzt ist (Fig. 6), wird durch Verdrehen des Spannelementes 10 in seine Verriegelungsposition (Fig. 8) in einem kurzen Abschnitt unterhalb des Spannelementes 10 in die Sicke 4 eingedrückt und bleibend verformt, wie aus Fig. 7, in der das Spannelement 10 nicht dargestellt wurde, und aus Fig. 8 ersichtlich ist. Durch die Einbiegung des Randes 5 in die sicke wird in Längsrichtung auf Grund des Formschlusses eine feste Verbindung zwischen dem Flanschprofil 2 und dem Rohr 1 ohne zusätzliche Bearbeitung des Rohrendes erzielt, wobei, wie Fig. 8 oder 11 zeigt, das Spannelement 10 als Verformungswerkzeug dient. Das in der Durchbrechung 9 drehbar gelagerte Spannelement 10 wird dabei gleichzeitig bei L-förmigen Flanschprofilen 2 zur Verbindung der hochstehenden Stege 6 und damit zur Verbindung der Flanschprofile 2 untereinander herangezogen.

Ein als Flachriegel 11 ausgebildetes Spannelement ist im Detail in den Fig. 2 bis 5 und 8 gezeigt. Das in den Durchbrechungen 9 drehbare Mittelstück 13 trägt beidseitig einen flachen Kopfteil 12, von denen jeder mit einer Verriegelungsnocke 14 versehen ist, und zwischen denen ein Spalt 15 gebildet ist. Zum Einsetzen der Flachriegel 11 müssen als Durchbrechungen 9 Längsschlitze vorgesehen sein, durch die die Flachriegel 11 eingesteckt werden. Aus der zu den ersten Stegen 3 parallelen Einsetzposition wird dann jeder Flachriegel 11 um 90° verdreht, wobei die Ränder 5 beide Rohre 1 gleichzeitig durch die Verriegelungsnocken 14 in die Sicken 4 eingedrückt werden (Fig. 8). Damit ist die Verbindung zwischen den beiden Flanschprofilen 2 und den beiden Rohren 1 erfolgt und fixiert. Im Bereich der Sicken 8 der hochstehenden Stege 6 ist die Gesamtbreite etwas größer als die Breite des Spaltes 15 im Flachriegel 11, sodaß der Flachriegel 11 in der Verriegelungsposition festgeklemmt ist. Die mit dem Flanschprofil 2 in Berührung kommenden Stirnflächen des Flachriegels 11 sind an den Kanten abgeschrägt (Fig. 3, 4, 5), sodaß das Verdrehen in die Verriegelungsstellung erleichtert wird.

In der Ausführung nach Fig. 11 und 12 ist das Spannelement 10 durch eine Mutternschraube gebildet, deren Kopf unregelmäßig geformt ist. Er stellt ein Flachstück 16 dar, das exzentrisch von dem durch den Gewindebolzen gebildeten Mittelteil 13 absteht, wobei einem üblichen Schraubenkopf entsprechender Teil zum Angriff eines Gabelschlüssels kantig ausgebildet ist, während der exzentrische Teil die in die Sicke 4 einschwenkbare Verriegelungsnocke 14 bildet. Deren untere Stirnfläche ist zur Hälfte gebogen und zur anderen Hälfte eben, wobei der ebene Teil nach dem Einschwenken in die Sicke 4 einen Drehbegrenzungsanschlag bildet. Die Durchbrechungen 9 in den hochstehenden Stegen 6, die in dieser Ausführung weder den Versteifungssteg 7 noch die Sicke 8 aufweisen, sind als kreisrundes Loch ausgebildet, wobei die Gewindemutter 17 an der zweiten seite die Verbindung der beiden Flansche bewirkt. Werden derartige Spannelemente 10 wechselweise von verschiedenen Seiten eingesetzt, so werden ebenfalls beide Rohre 1 mit den Flanschprofilen 2 formschlüssig verbunden.

In der Ausführung nach Fig. 13 besteht das Spannelement 10 aus einer Mutternschraube mit Kopf 20 und Mutter 21, wobei ähnlich Beilagsscheiben je ein Flachstück 19 in der vorstehend beschriebenen Art dem schraubenkopf 20 und der Schraubenmutter 21 zugeordnet ist. Der Schaft der Mutternschraube bildet wieder das als Löcher ausgebildete Durchbrechungen 9 durchsetzende Mittelstück 13 und die Flachstücke 19 stellen die beiden, je eine Verriegelungsnocke 14 tragenden Kopfteile 12 dar. Beim Anziehen der Mutter 21 verdreht sich das mutternseitige Flachstück 19 auf Grund der Reibung bis zum Anschlag in der Sicke 4 des einen Flanschkopfes 2 und durch Verdrehen des Kopfes 20 um etwa 90° auf Grund der Drehung auch das kopfseitige Flachstück 19 bis zum Anschlag in der Sicke 4 des anderen Flanschprofiles 2, sodaß auch in dieser Ausführung das Einsetzen und Festziehen der Spannelemente 10 sowohl die Rohre 1 mit den Flanschprofilen 2 als auch diese untereinander fixiert.

Fig. 14 zeigt eine vereinfachte, insbesondere zur Verbindung kleinerer, leicht handhabbarer Rohre 1 geeignete Ausführung. Hier wird ein einstückiges T-förmiges Flanschprofil 2, dessen beide hochstehende und Durchbrechungen aufweisenden Stege 6 über die abgebogene Kante 18 untereinander verbunden sind, mit seinem ersten Steg 3 in das eine Rohr 1 eingeschoben, und anschließend das zweite Rohr 1 auf den zweiten Steg 3 aufgeschoben. Nach der Anbringung der spannelemente 10 sind beide Rohre mit dem Flanschprofil 2 formschlüssig verbunden.

Falls erwünscht, können zwischen den hochstehenden Stegen 6 zweier L-förmiger Flanschprofile 2 und zwischen den Stegen 3 und den Rohrenden Dichtungen eingesetzt werden, wobei in den Stegen 3 gegebenenfalls zusätzlich Aufnahmerillen geformt sein können. Als Aufnahmerille in den hochstehenden Stegen 6 kann vor allem der durch die beiden Sicken 8 gebildete Hohlraum 22 verwendet werden. (Fig. 8)

**Patentansprüche**

1. Flanschverbindung für dünnwandige, insbesondere gewickelte Rohre, mit einem Flanschprofil, das einen in das Ende des Rohres einsetzbaren, ersten Steg, der sich parallel zur Rohrwandung erstreckt, und einen davon senkrecht hochstehenden, zweiten Steg aufweist, und mit mehreren am zweiten Steg anzuordnenden Spannelementen, die das Rohr mit dem Flanschprofil verbinden, dadurch gekennzeichnet, daß der in das Rohrende (1) einsetzbare erste Steg (3) des Flanschprofiles (2) in der dem zweiten Steg (6) zugewandten Seite eine Sicke (4) aufweist, und daß jedes Spannelement (10) am zweiten Steg (6) um eine zur Stegebene senkrechte Achse drehbar gelagert ist und einen Kopfteil (12) aufweist, der eine in die Sicke (4) des ersten Steges (3) einschwenkbare Verriegelungsnocke (14) aufweist.

2. Flanschverbindung nach Anspruch 1, dadurch gekennzeichnet, daß das Spannelement (10) die zweiten Stege (6) zweier aneinanderliegender Flanschprofile (2) miteinander verbindet.

3. Flanschverbindung nach Anspruch 2, dadurch gekennzeichnet, daß das Spannelement (10) an beiden Seiten eines die beiden zweiten Stege (6) der beiden Flanschprofile (2) durchsetzenden Mittelstückes (13) je einen Kopfteil (12) mit einer Verriegelungsnocke (14) aufweist.

4. Flanschverbindung nach Anspruch 3, dadurch gekennzeichnet, daß an den zweiten Stegen (6) untereinander fluchtende Längsschlitze (9) vorgesehen sind, und das Spannelement (10) als einstückiger Flachriegel (11) ausgebildet ist, der aus einer zu den ersten Stegen (3) parallelen Einsetzposition in eine dazu senkrechte Spannposition verdrehbar ist.

5. Flanschverbindung nach Anspruch 4, dadurch gekennzeichnet, daß die beiden Kopfteile (12) des Flanschriegels (11) durch das Mittelstück (13) voneinander um die doppelte Dicke eines zweiten Steges (6) distanziert sind, und jeder zweite Steg (6) eine zum jeweils anliegenden Kopfteil (12) hin ausgeformte Sicke (8) zwischen dem Längsschlitz und dem ersten Steg (3) aufweist.

6. Flanschverbindung nach Anspruch 4 oder 5, dadurch gekennzeichnet, daß die das Flanschprofil (2) berührenden Kanten jedes Kopfteiles (12) abgeschrägt oder gerundet sind.

**Claims**

1. A flange connection for thin-walled, in particular wrapped tubes, comprising a flange profile member which has a first limb which can be fitted into the end of the tube and which extends parallel to the wall of the tube, and a second limb which is perpendicularly upstanding therefrom, and a plurality of clamping elements which are to be arranged on the second limb and which connect the tube to the flange profile member, characterised in that the first limb (3) of the flange profile member (2), which can be fitted into the end of the tube (1), has a corrugation (4) in the side which is towards the second limb (6) and that each clamping element (10) is mounted at the second limb (6) rotatably about an axis which is perpendicular to the plane of the limb, and has a head portion (12) which has a locking projection (14) which can be pivoted into the corrugation (4) in the first limb (3).

2. A flange connection according to claim 1 characterised in that the clamping element (10) interconnects the second limbs (2) of two flange profile members (12) which bear against each other.

3. A flange connection according to claim 2 characterised in that the clamping element (10) has a respective head portion (12) with a locking cam (14) at both sides of a central portion (13) which passes through the two second limbs (6) of the two flange profile members (2).

4. A flange connection according to claim 3 characterised in that elongated slots (9) which are aligned with each other are provided on the second limbs (6) and the clamping element (10) is in the form of an integral flat locking member (11) which is rotatable from an insertion position in which it is parallel to the first limbs (3) into a clamping position which is perpendicular thereto.

5. A flange connection according to claim 4 characterised in that the two head portions (12) of the flat locking member (11) are spaced from each other by the central portion (13) by double the thickness of a second limb (6) and each second limb (6) has a corrugation (8) which is shaped out towards the respective head portion (12) bearing thereagainst, between the slot and the first limb (3).

6. A flange connection according to claim 4 or claim 5 characterised in that the edges of each head portion (12), which contact the flange profile member (2), are bevelled or rounded.

**Revendications**

1. Joint à brides pour tuyaux à parois minces, notamment des tuyaux enroulés, comportant un profilé de bride formé d'une première branche apte à être insérée dans l'extrémité du tuyau et s'étendant parallèlement à la paroi du tuyau, et d'une seconde branche s'étendant vers le haut perpendiculairement à la première, et plusieurs éléments de serrage destinés à être disposés sur la seconde branche et reliant le tuyau au profilé de bride, caractérisé en ce que la première branche (3) du profilé de bride (2) apte à être insérée dans l'extrémité de tuyau (1) possède, sur le côté tourné vers la première branche (6), une moulure (4), et en ce que chaque élément de serrage (10) prévu sur la seconde branche (6) est monté pivotant autour d'un axe perpendiculaire au plan de la branche et possède une patte (12) pourvue d'un mentonnet de verrouillage (14) apte à être amené par pivotement dans la moulure (4) de la première branche (3).

2. Joint à brides selon la revendication 1, caractérisé en ce que l'élément de serrage (10) relie entre elles les secondes branches (6) de deux profilés de brides (2) placés l'un contre l'autre.

3. Joint à brides selon la revendication 2, caractérisé en ce que l'élément de serrage (10) possède, de chaque côté d'une pièce centrale (13) traversant les deux secondes branches (6) des deux profilés de brides (2), une patte (12) comportant un mentonnet de verrouillage (14).

4. Joint de brides selon la revendication 3, caractérisé en ce qu'il est prévu, sur le secondes branches (6), des fentes longitudinales (9) dans l'alignement l'une de l'autre, et l'élément de serrage (10) est conçu comme un verrou plat (11) en une pièce qui est apte à pivoter, à partir d'une position de mise en place parallèle aux premières branches (3), dans une position de serrage perpendiculaire à celles-ci.

5. Joint à brides selon la revendication 4, caractérisé en ce que les deux pattes (12) du verrou plat (11) sont espacées l'une de l'autre par la pièce centrale (13), du double de l'épaisseur d'une seconde branche (6), et chaque seconde branche (6) possède, entre la fente longitudinale et la première branche (3), une moulure (8) réalisée en direction de la patte adjacente respective (12).

6. Joint à brides selon la revendication 4 ou 5, caractérisé en ce que les bords de chaque patte (12) qui sont en contact avec le profilé de bride (2) sont biseautés ou arrondis.

Fig. 1

Fig. 2

Fig. 3

Fig. 5

Fig. 4

Fig. 6

Fig. 7

Fig. 8

Fig.9

2  1

3  6  9

Fig.10

2

1

9

Fig. 11

9  XII  16  6  17

14

XII

Fig. 12

Fig. 13

Fig. 14